# EUROPEAN PATENT APPLICATION

(11) **EP 4 507 113 A1**
(43) Date of publication of application: **12.02.2025**
(21) Application number: 23791982.4
(22) Date of filing: 27.01.2023
(51) Int. Cl.: H01M 50/533, H01M 50/536, H01M 50/553

(54) **ELECTRODE LEAD AND LEAD INPUT PALLET HAVING SHAPE CORRESPONDING THERETO**

(30) Priority: 22.04.2022 KR 20220049893
(71) Applicant: LG Energy Solution, Ltd., Seoul 07335 (KR)
(72) Inventor: KWON, Myung Bin, Daejeon 34122 (KR)
(74) Representative: Plasseraud IP
(86) International application number: PCT/KR2023/001279
(87) International publication number: WO 2023/204398

(57) **Abstract**

The present invention relates to an electrode lead included in a pouch-type battery cell, and more particularly, to an electrode lead having an asymmetric shape to geometrically distinguish a direction in which burrs inevitably generated due to the characteristics of a metal plate being cut and processed by a press are formed and a direction in which the burrs are not formed.

## Description

### Technical Field

This application claims the benefit of priority to Korean Patent Application No. 10-2022-0049893, filed on April 22, 2022 in the Korean Intellectual Property Office, the disclosure of which is incorporated herein by reference in its entirety.

The present invention relates to a press-processed electrode lead and a pallet for accommodating the same.

### Background Art

A secondary battery, which has high applicability according to a product group and an electrical property such as high energy density, is widely applied to not only a portable device, but also an electric vehicle (EV) or a hybrid electric vehicle (HEV), which is driven by an electrical driving source.

Since the secondary battery has the primary advantage of remarkably reducing the use of fossil fuel, as well as the advantage of not generating by-products according to the use of energy at all, the secondary battery is attracting attention as a new energy source for eco-friendly and energy efficiency improvement.

Types of secondary batteries currently widely used include lithium ion batteries, lithium polymer batteries, nickel cadmium batteries, nickel hydrogen batteries, nickel zinc batteries, and the like. An operating voltage of a unit secondary battery cell, i.e., a unit battery cell, ranges from about 2.5 V to about 4.5 V. Accordingly, when a higher output voltage is required, a plurality of battery cells may be connected in series to configure a battery pack. In addition, according to a charge/discharge capacity required for the battery pack, a plurality of battery cells may be connected in parallel to configure a battery pack. Accordingly, the number of battery cells included in the battery pack and the form of electrical connection may be variously set according to the required output voltage and/or charge/discharge capacity.

Meanwhile, in general, secondary batteries are classified into cylindrical batteries and prismatic batteries in which an electrode assembly is built in a cylindrical or prismatic metal can, and pouch-type batteries in which the electrode assembly is built in a pouch-type case of an aluminum laminate sheet depending on the shape of a battery case, and the electrode assembly built in the battery case is formed in a structure including a positive electrode, a negative electrode, and a separator interposed between the positive and the negative electrodes, is a power generating element capable of charging and discharging, and is classified into a jelly-roll type electrode assembly wound with a separator interposed between a positive electrode and a negative electrode, which are long sheet-shaped and are coated with active materials, and a stack type electrode assembly in which a plurality of positive electrodes and negative electrodes of a predetermined size are sequentially stacked while a separator is interposed therebetween.

Among them, a pouch-type battery cell is connected to the outside of the cell from an electrode tab, which is connected to each of the positive electrode and the negative electrode provided in the battery cell, through an electrode lead welded to the electrode tab.

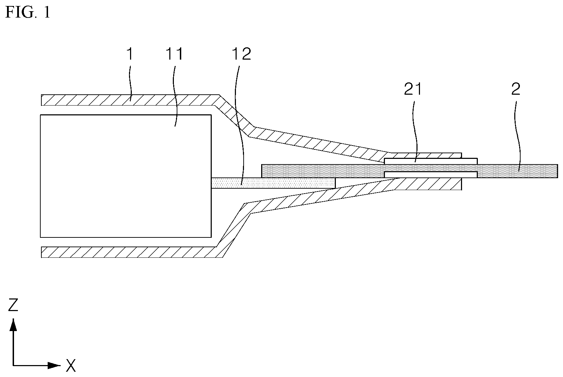

FIG. 1 illustrates a cross section of one side surface of a typical pouch cell. Referring to this, an electrode tab 12 protrudes from an electrode assembly 11, in which a negative electrode and a positive electrode coated with an active material are stacked with a separator interposed therebetween, and is welded while being in contact with an electrode lead 2 in a height direction, and a lead film 21 stacked on the electrode lead 2 in a width direction is thermally fused to a pouch, and thus the pouch is sealed while the electrode lead 2 protrudes and extends to the outside of the pouch. Ultrasonic welding is mainly used for the welding.

Meanwhile, the electrode lead 2 is generally produced by press-cutting a metal plate into a rectangular shape or the like, and then attaching the lead film 21 thereto.

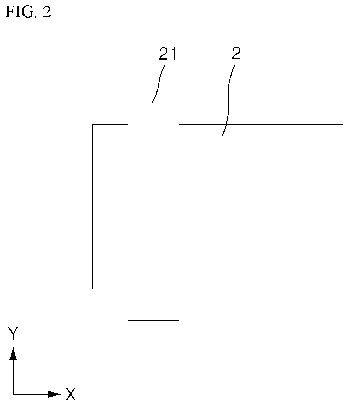

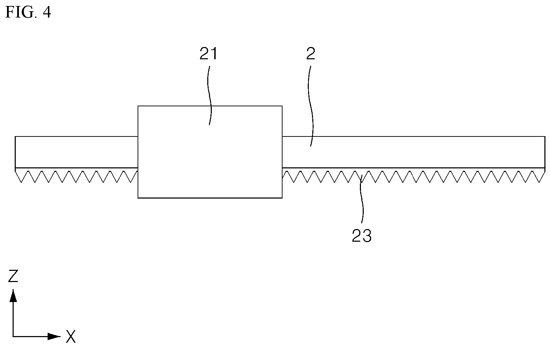

FIGS. 2 and 4 illustrate an upper surface, a lower surface, and a side surface of the press-processed electrode lead 2, respectively. Referring to these drawings, uneven burrs 23 protruding in a pressing direction of the press, i.e., in a downward direction, are formed along an edge of the electrode lead 2 in the above-described process. The burrs 23 may cause problems during the ultrasonic welding process, and may lead to welding defects between the electrode tab 12 and the electrode lead 2 and a disconnection resulting therefrom.

However, since the electrode lead has a symmetrical shape, and the burrs are formed so finely that they cannot be visually identified, in the actual welding process, it is necessary to determine an input direction by checking a direction of the burrs by touch while welding the electrode lead to the electrode tab, and thus there is a problem of possible mistake.

### Disclosure

### Technical Problem

The present invention is conceived in view of the aforementioned problem of the related art, and an object thereof is to provide an electrode lead having an asymmetric shape to distinguish an upper surface on which burrs due to press processing are not formed and a lower surface on which the burrs are formed.

Another object of the present invention is to provide a lead input pallet having a direction restriction portion to allow the electrode lead of which upper and lower surfaces are distinguished during press processing to be input in one direction.

Still another object of the present invention is to prevent an error occurring in the process of distinguishing a difference between the upper and lower surfaces in a welding process of an electrode tab and the electrode lead by using the improved electrode lead and lead input pallet.

Yet another object of the present invention is to prevent a disconnection of an electrode tab portion by improving bonding performance between the electrode tab and the electrode lead.

Yet another object of the present invention is to provide an electrode lead having an improved structure, a pouch cell including the same, a battery pack including the pouch cell, and an electronic device including the battery pack.

Aspects according to the present invention are not limited to the above ones, and other aspects and advantages that are not mentioned above may be clearly understood from the following description and may be more clearly understood from the aspects set forth herein. Additionally, the aspects and advantages in the present invention may be realized via means and combinations thereof that are described in the appended claims.

### Technical Solution

In order to achieve the above-described objective, the present invention provides an electrode lead having an asymmetric shape and a lead input pallet including a direction restriction portion so that the electrode lead can be input in one direction.

This technical solution may be applied to an electrode lead that is welded to an electrode tab, in manufacturing a pouch cell, and serves to connect an electrode provided in an electrode assembly to which the electrode tab is connected, to the outside.

The electrode lead may be a metal plate and may be produced by press cutting. Accordingly, burrs may be formed in a press cutting direction along an edge of one surface of upper and lower surfaces of the electrode lead.

A lead film extending in a width direction of the electrode lead and protruding from both sides of the electrode lead in the width direction may be stacked on a portion of the surface of the electrode lead.

An outline of the electrode lead may be formed to have a predetermined asymmetric shape when viewed from the surface on which the burrs are formed. In this case, the outline of the electrode lead may be a reversed shape of the asymmetric shape when viewed from the surface on which the burrs are not formed.

The asymmetric shape may be asymmetric with respect to an imaginary axis (X-axis) passing through a center of the electrode lead to be parallel to a length direction of the electrode lead.

The asymmetric shape may be asymmetric with respect to an imaginary axis (Y-axis) passing through the center of the electrode lead to be parallel to the width direction of the electrode lead.

The asymmetric shape may be point asymmetric with respect to the center of the electrode lead.

The asymmetric shape of the electrode lead may be formed during the production of the electrode lead. That is, the electrode lead may be cut to have the asymmetric shape from a process of being cut by a press.

Alternatively, the asymmetric shape of the electrode lead may be formed through further processing after the production of the electrode lead.

The asymmetric shape may include a chamfered shape provided at one corner.

The asymmetric shape may include an uneven shape provided at an edge portion.

One end portion of the electrode lead is a portion welded to the electrode tab, and the asymmetric shape may be formed to avoid the welded portion. In addition, the asymmetric shape may also be formed at the other end portion of the portion, in which the welding is performed, in the length direction.

The asymmetric shape may be formed in the outline of the lead film.

An electrode lead according to one aspect of the present invention may be cut into a pentagonal shape with a chamfered shape, which is added to one corner of a rectangular shape, through a press, and may include a lead film that extends in a width direction, is stack on a portion of a surface of the electrode lead, and extends to protrude from both sides of the electrode lead in the width direction.

In this case, the chamfered shape may be formed on any one of both corners of the other side of a portion, which is welded to an electrode tab in a length direction, with respect to the lead film.

The electrode lead may be accommodated in a lead input pallet configured to stack and store the electrode lead.

The pallet may include an inlet through which the electrode lead is accommodated, and a direction restriction portion configured to restrict an input direction of the electrode lead.

The direction restriction portion may have a shape that does not interfere with an outline of the electrode lead when the electrode lead is input in one direction of upward and downward directions, and interferes with the outline of the electrode lead to restrict the input of the electrode lead or not properly store the electrode lead when the electrode lead is input in the other direction.

The pallet may be formed to accommodate the electrode lead including the lead film. In this case, a lead film receiving port for receiving protrusions of the lead film on both sides of the electrode lead in the width direction may be additionally included.

The inlet may be for vertically inputting the electrode lead, and may be for inputting the electrode lead in a direction perpendicular to the inlet.

The inlet may be for storing a single or a plurality of electrode leads.

The inlet may be provided in plural in one pallet.

The inlet may be provided in plural in one pallet by being juxtaposed in the width direction and/or the length direction.

The direction restriction portion may have a shape complementary to or corresponding to the asymmetric shape of the electrode lead.

The direction restriction portion may be formed at a position corresponding to an asymmetric shape provided in the outline of the lead film.

The pallet according to the aspect of the present invention may be a pallet having a shape in which a plurality of inlets for stacking and storing a plurality of electrode leads are continuously formed in multiple rows and multiple columns, for example, in parallel of 3 rows and 3 columns, wherein each of the inlets includes a direction restriction portion having a shape corresponding to the electrode lead in which a chamfered shape is formed on one corner thereof, and a lead film receiving port for receiving a lead film.

Meanwhile, the present invention provides an improved electrode lead, a pouch-type secondary battery including the same, a battery pack including the pouch-type secondary battery, and an electronic device including the battery pack as a power source.

The electronic device may be selected from, for example, a computer, a mobile phone, a wearable electronic device, a power tool, an electric vehicle (EV), a hybrid electric vehicle, a plug-in hybrid electric vehicle, an electric two-wheeled vehicle, an electric golf cart, or a power storage system.

The structures and manufacturing methods of the electronic devices are known in the art, and thus detailed descriptions thereof will be omitted herein.

### Advantageous Effects

The present invention allows upper and lower surfaces of an electrode lead to be distinguished with the naked eye by processing the electrode lead in an asymmetric shape. Accordingly, it is possible to prevent an error that is caused by distinguishing between a surface on which burrs are formed by an existing press process and a surface on which the burrs are not formed, only by tactile sensation. That is, when the electrode tab and the electrode lead are welded, the burrs may interfere with bonding to cause welding defects and possible disconnection, and thus, in order to prevent this, the present invention provides the improved electrode lead to prevent the possibility of the disconnection by surely distinguishing upper and lower surfaces of the electrode lead.

In another aspect of the present invention, the asymmetric shape is formed by avoiding a portion in which the electrode lead is welded to the electrode tab, so that the purpose thereof can be achieved without affecting the welding.

In still another aspect of the present invention, the asymmetric shape is formed on the lead film, so that the purpose thereof can be achieved without affecting the shape of a metal portion of the electrode lead.

In yet another aspect of the present invention, a lead input pallet having an inlet, through which the electrode lead having the asymmetric shape can be input only in a predetermined direction and stored, can be provided, and thus the electrode lead can be stored by distinguishing the surface on which the burrs are formed and the surface on which the burrs are not formed until the electrode lead and the electrode tab are subsequently welded.

In yet another aspect of the present invention, it is possible to provide a lead input pallet in which a plurality of inlets are juxtaposed in a width direction and/or a length direction.

In addition to the above effects, various other effects may be produced according to the preset disclosure, and description of the effects is provided with reference to each aspect or description of effects predicted by one having ordinary skill in the art readily and the like are omitted.

### Description of Drawings

FIG. 1 is a side cross-sectional view illustrating a state in which an electrode tab and an electrode lead are welded in a typical pouch cell.
FIG. 2 is a plan view illustrating an upper surface of the electrode lead having a lead film.
FIG. 3 is a plan view illustrating a lower surface of the electrode lead having the lead film and a portion in which burrs are formed by press cutting.
FIG. 4 is a side view illustrating a side surface of the electrode lead, which has a general rectangular shape and in which the lead film is provided, and the portion in which the burrs are formed by press cutting.
FIG. 5 is a plan view illustrating the upper surface of the electrode lead having an asymmetric shape of a chamfered shape.
FIG. 6 is a plan view illustrating one unit of a lead inlet having a shape corresponding to the electrode lead having the asymmetric shape of a chamfered shape.
FIG. 7 is a plan view illustrating a state in which the electrode lead having the asymmetric shape of a chamfered shape is appropriately arranged in one unit of the lead inlet having a shape corresponding to the electrode lead and thus interference does not occur therebetween.
FIG. 8 is a plan view illustrating a state in which the electrode lead having the asymmetric shape of a chamfered shape is incorrectly arranged in one unit of the lead inlet having a shape corresponding to the electrode lead and thus interference occurs therebetween.
FIG. 9 is a plan view of a lead input pallet including a plurality of juxtaposed inlets each having a shape corresponding to the electrode lead having the asymmetric shape of a chamfered shape.

### [Description of Reference Numerals]

1: pouch cell
11: electrode assembly
12: electrode tab
2: electrode lead
21: lead film
22: asymmetric shape
23: burr
3: lead input pallet
31: inlet
32: direction restriction portion
33: lead film receiving port
X: length direction
Y: width direction
Z: height direction

### Modes of the Invention

The above-described aspects, features and advantages are specifically described hereafter with reference to the accompanying drawings such that one having ordinary skill in the art to which the present invention pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred aspects according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower portion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

For convenience of description, directions of long and short sides of a plane forming an electrode lead are referred herein to as a length direction (X direction) and a width direction (Y direction), respectively. In addition, a direction perpendicular to the plane is referred to as a height direction (Z direction).

The present invention relates to an electrode lead that is included in a pouch-type secondary battery cell and welded to an electrode tab.

Atypical pouch cell 1 includes an electrode assembly 11, an electrode tab 12 connected to the electrode assembly 11, an electrode lead 2 connected to the electrode tab 12, a lead film 21 surrounding the electrode lead 2, and a pouch configured to accommodate the electrode assembly 11 and the electrode tab 12 and sealed by being fused onto the lead film 21.

The electrode assembly 11 has a structure in which an electrode plate (a positive electrode plate and a negative electrode plate) coated with an active material on one surface or both surfaces thereof is stacked multiple times with a separator interposed therebetween. The electrode tab 12 may include a positive electrode tab connected to the positive electrode plate and a negative electrode tab connected to the negative electrode plate.

In the present invention, a positive electrode active material coated on the positive electrode plate and a negative electrode active material coated on the negative electrode plate may be used without limitation as long as the active materials are known in the art.

The positive electrode active material may include, as a main component, a lithium intercalation material such as a layered compound such as lithium cobalt oxide (LiCoO₂), lithium nickel oxide (LiNiO₂), and the like, or a compound substituted with one or more transition metals; lithium manganese oxide (LiMnO₂) represented by Chemical Formula Li₁₊ₓMn₂ₓO₄ (where x is 0 to 0.33), LiMnO₃, LiMn₂O₃, LiMnO₂, and the like; lithium copper oxide (Li₂CuO₂); vanadium oxide such as LiV₃O₈, LiFe₃O₄, V₂O₅, Cu₂V₂O₇, and the like; Ni site-type lithiated nickel oxide represented by Chemical Formula LiNi₁₋ₓMₓO₂ (where M=Co, Mn, Al, Cu, Fe, Mg, B or Ga, and x=0.01 to 0.3); lithium manganese composite oxide represented by Chemical Formula LiMn₂₋ₓMₓO₂ (where M=Co, Ni, Fe, Cr, Zn or Ta, and x=0.01 to 0.1) or Li₂Mn₃MO₈ (where M=Fe, Co, Ni, Cu or Zn); LiMn₂O₄ in which a portion of Li in the chemical formula is substituted with alkaline earth metal ions; a disulfide compound; Fe₂(MoO₄)₃; or a composite oxide formed by a combination thereof, but the present invention is not limited only thereto.

A positive electrode current collector has a thickness of, for example, 3 µm to 500 µm. The positive electrode current collector is not particularly limited as long as it has conductivity without causing chemical changes in the battery, and for example, stainless steel, aluminum, nickel, titanium, calcined carbon, or aluminum or stainless steel whose surface is treated with carbon, nickel, titanium, or silver may be used. The electrode current collector may have fine irregularities formed on a surface thereof to increase the adhesion of the positive electrode active material and may be used in various forms such as a film, a sheet, a foil, a net, a porous body, a foamed body, non-woven fabric, and the like.

A conductive material may be additionally mixed with the positive electrode active material particles. The conductive material is added, for example, in an amount of 1 to 50 wt% based on the total weight of the mixture including the positive electrode active material. The conductive material is not particularly limited as long as it has high conductivity without causing a chemical change in the battery, and for example, may use conductive materials selected from: graphite such as natural graphite and artificial graphite; carbon black such as carbon black, acetylene black, Ketjen black, channel black, furnace black, lamp black, and summer black; conductive fibers such as carbon fibers and metal fibers; metal powders such as carbon fluoride, aluminum, and nickel powder; conductive whiskers such as zinc oxide and potassium titanate; conductive oxides such as titanium oxide; polyphenylene derivatives, and the like.

In addition, a negative electrode is manufactured by coating and drying negative electrode active material particles on a negative electrode current collector, and as necessary, components such as the conductive material described above, a binder, a solvent, and the like may be further included.

The negative electrode current collector has a thickness of, for example, 3 µm to 500 µm. The negative electrode current collector is not particularly limited as long as it has conductivity without causing a chemical change in the battery, and for example, may use copper, stainless steel, aluminum, nickel, titanium, calcined carbon, copper or stainless steel surface-treated with carbon, nickel, titanium, silver, or the like, an aluminum-cadmium alloy, or the like. In addition, like the positive electrode current collector, fine irregularities may be formed on the surface of the negative electrode current collector to strengthen the coupling force of the negative electrode active material, and the negative electrode current collector may be used in various forms such as a film, a sheet, a foil, a net, a porous body, a foam, a nonwoven body, or the like.

The negative electrode active material may include, for example, carbon such as non-graphitizable carbon and graphitic carbon; a metal composite oxide such as LiₓFe₂O₃ (0≤x≤1), LiₓWO₂ (0≤x≤1), and SnₓMe₁₋ₓMe'yO_{z} (Me: Mn, Fe, Pb, Ge; Me': Al, B, P, Si, Group 1, Group 2, Group 3 elements on the periodic table, halogen; a metal composite oxide of 0≤x≤1; 1≤y≤3; 1≤z≤8); lithium metal; lithium alloys; silicon-based alloys; tin-based alloys; oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials, and the like.

The electrode tab 12 may be formed by a portion of the electrode plate, which is not coated with the active material and extends to protrude to the outside from the stacked structure of the electrode plate and the separator. Portions extending from the stacked plurality of electrode plates may overlap each other to form the electrode tabs 12.

Hereinafter, exemplary aspect of the present invention will be described with reference to the accompanying drawings.

FIG. 1 is a side cross-sectional view illustrating a state in which the electrode tab 12 and the electrode lead 2 are welded in the typical pouch cell 1.

Referring to FIG. 1, both the electrode tab 12 and the electrode lead 2 may be made of an electrically conductive metal material. Accordingly, the electrode tab 12 and the electrode lead 2 may be electrically connected by stacking end portions thereof, which face each other, in the height direction so that some portions overlap in the length direction, and then welding those portions together. The welding may be, for example, ultrasonic welding. However, the welding method is not limited thereto.

The electrode lead 2 may subsequently protrude outside the pouch even after the insulated pouch is sealed by the lead film 21, thereby connecting the battery cell to an electronic device or the like.

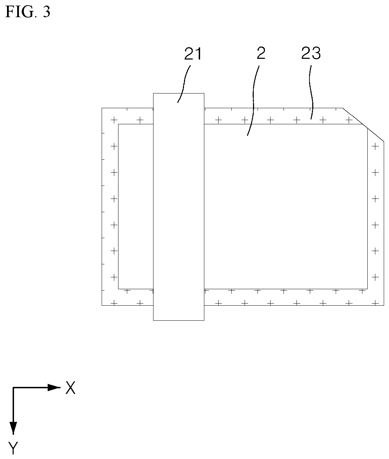

FIG. 2 is a plan view illustrating an upper surface of the electrode lead 2, which generally has a rectangular shape and in which the lead film 21 is provided, FIG. 3 is a plan view illustrating a lower surface of the electrode lead 2 with the lead film 21 and a portion in which burrs 23 are formed by press cutting, and FIG. 4 is a side view illustrating a side surface of the electrode lead 2 with the lead film 21 and the portion in which the burrs 23 are formed by press cutting.

Referring to FIGS. 2 and 4, the electrode lead 2 may be a rectangular metal plate that extends in the length direction (X direction) while having a predetermined width in the width direction (Y direction), and has a length greater than the width. The electrode lead 2 may be manufactured by cutting an edge of the metal plate through a press, and an outline thereof thus processed may have a rectangular shape. The rectangular shape may have a length in the length direction greater than a length in the width direction.

The lead film 21 protruding further in the width direction than the electrode lead 2 is attached to the electrode lead 2. A pair of lead films 21 are fused to the upper and lower surfaces of the electrode lead 2, respectively, and both ends thereof in the width direction may be fused to each other. Accordingly, a gap between the lead film 21 and the electrode lead 2 may be completely sealed.

Referring to FIGS. 3 and 4, in the press processing process, the burrs 23, which are formed irregularly toward a pressing direction of the press may be formed on the electrode lead 2 along a cut surface of an edge of the electrode lead 2. When welding between the electrode tab 12 and the electrode lead 2 is performed such that a surface on which the burrs 23 are formed comes into contact with the electrode tab 12, welding defects and disconnection may occur. Accordingly, the welding may be performed such that a surface of the electrode lead 2, on which the burrs 23 are not formed, comes into contact with the electrode tab.

Accordingly, in order to make it possible to visually (geometrically) distinguish between the surface on which the burrs 23 are formed and the surface on which the burrs 23 are not formed, in the aspect, the electrode lead 2 whose outline has an asymmetric shape 22 is provided.

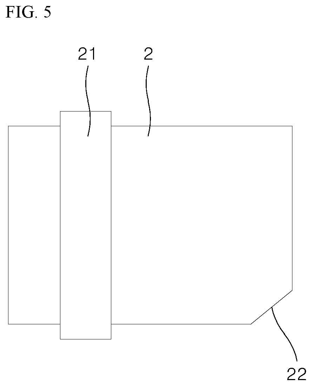

FIG. 5 is a plan view illustrating the upper surface of the electrode lead 2 having the asymmetric shape 22 of a chamfered shape. Referring to this, the electrode lead 2 may have the asymmetric shape 22 that allows the edge to be shaped differently when the electrode lead 2 is turned upside down such that each of the upper and lower surfaces is facing upward, so that which surface is facing upward can be identified by the naked eye.

The asymmetric shape 22 serves to ensure that, when the electrode lead 2 is accommodated in a pallet to be described below, insertion is restricted due to interference with a particular shape (a direction restriction portion) of the pallet when the electrode lead is inserted in an incorrect direction, and insertion is permitted since there is no interference with the particular shape (the direction restriction portion) of the pallet when the electrode lead is inserted in a correct direction.

The asymmetric shape 22 may be a shape asymmetric with respect to an imaginary axis (X-axis) that is parallel to the length direction of the electrode lead 2 and passes through a center of the electrode lead 2, and/or a shape asymmetric with respect to an imaginary axis (Y-axis) that is parallel to the width direction of the electrode lead 2 and passes through the center of the electrode lead 2.

For example, when the electrode lead 2 is turned upside down on the basis of the X-axis, outline shapes of the electrode lead 2 may be different from each other when the electrode lead 2 is viewed from the same direction.

**In** addition, when the electrode lead 2 is turned upside down on the basis of the Y-axis, the outline shapes of the electrode lead 2 may be different from each other when the electrode lead 2 is viewed from the same direction.

Preferably, the asymmetric shape 22 may be asymmetric with respect to the X-axis and may also be asymmetric with respect to the Y-axis. In addition, the asymmetric shape 22 may be provided in the electrode lead 2 itself except for the lead film 21.

The asymmetric shape 22 may be formed simultaneously in the process of cutting the edge of the electrode lead 2. That is, the electrode lead 2 may be cut into a shape including the asymmetric shape 22 from when the edge thereof is first cut through the press. In this case, it is advantageous in that the burrs 23 generated in the process of cutting the edge and the burrs generated in the press cutting process for forming the asymmetric shape 22 may coincide in direction.

In addition, in this case, it is advantageous in that the outline of the electrode lead 2 viewed from the direction in which the burrs 23 are formed and the outline of the electrode lead 2 viewed from a direction in which the burrs 23 are not formed are not merely different, but are each determined in a specific shape. That is, the direction in which the burrs 23 are formed has a specific relationship with the asymmetric shape 22, so that the shapes of the burrs 23 can be identified by simply checking the outline of the electrode lead 2.

However, even when the asymmetric shape 22 is not necessarily formed simultaneously with the outline of the electrode lead 2, the same effect can be achieved when the asymmetric shape 22 can be formed in a state in which the direction of the burrs resulting from processing the edge of the electrode lead 2 is determined through an automated process.

The asymmetric shape 22 may be a chamfered shape provided at one corner of the rectangular-shaped electrode lead 2. The electrode lead 2 including the chamfered shape may be manufactured by cutting one corner of the existing rectangular-shaped electrode lead 2, and may also be manufactured by cutting the metal plate into a pentagonal shape including a chamfered shape from the beginning.

When one corner of four corners of the electrode lead 2 is chamfered, the asymmetric shape in the X-axis direction and the Y-axis direction can be realized without almost removing the material of the electrode lead 2. In addition, the partial cutting of the corner portion has little or no effect on the process by which the electrode lead 2 is welded to a bus bar or the like.

The asymmetric shape may mainly be achieved by the cutting process of the electrode lead 2, and when such an asymmetric shaped portion (a cut portion) is present inside the pouch or at the sealing portion of the edge of the pouch, a sharp corner portion of the cut portion may break an insulating layer on an inner surface of the pouch or make it difficult to seal the edge of the pouch.

For this reason, the asymmetric shape may be designed to be disposed outside the pouch.

**In** another aspect, the asymmetric shape 22 may have an uneven shape provided at an edge portion of the outline of the electrode lead 2. The uneven shape may be an uneven shape in the X-axis direction or an uneven shape in the Y-axis direction.

The corner portion or the edge portion in which the asymmetric shape 22 is provided may be provided at a position outside a space between a welding point (welding point at one end portion of the electrode lead in the length direction) of the electrode tab and the electrode lead 2 and a welding point (welding point at the other end portion of the electrode lead in the length direction) of the electrode lead 2 and the bus bar. Accordingly, a phenomenon of increasing the resistance of the electrode lead 2 of the asymmetric shape 22 can be prevented.

The asymmetric shape 22 may be formed by avoiding one end portion of the electrode lead 2, at which the electrode lead 2 is welded while overlapping the electrode tab 12. For example, the asymmetric shape 22 may be formed at the other end portion in the length direction of the end portion of the electrode lead 2 at which the welding is performed. The asymmetric shape 22 may then not affect the welding between the electrode lead 2 and the electrode tab 12.

Meanwhile, the electrode lead 2 of the aspect may include the lead film 21 stacked on a portion of the surface thereof and extending in the width direction to protrude more than a width of the electrode lead 2, and the asymmetric shape 22 is provided at the outline of the lead film 21, thereby achieving the purpose thereof without affecting the shape of a metal portion.

For example, it is possible to make the lead film 21 asymmetric with respect to the X-axis, such as, by providing a chamfered shape at the corner portion of the lead film 21, or by setting a distance at which the lead film 21 extends to one side in the width direction from the electrode lead 2 to be different from a distance at which the lead film 21 extends to the other side in the width direction from the electrode lead 2. Of course, since the lead film 21 itself is disposed to be biased toward one side of the electrode lead 2 in the length direction, the disposition of the lead film 21 relative to the electrode lead 2 may itself implement the asymmetry with respect to the Y-axis.

The electrode lead 2 having the asymmetric shape 22 may be input into a lead input pallet 3 to be stacked and stored. The lead input pallet 3 may include an inlet 31 through which the electrode lead 2 is input, and the inlet 31 may include a direction restriction portion 32 for allowing the electrode lead 2 to be input only in a predetermined direction.

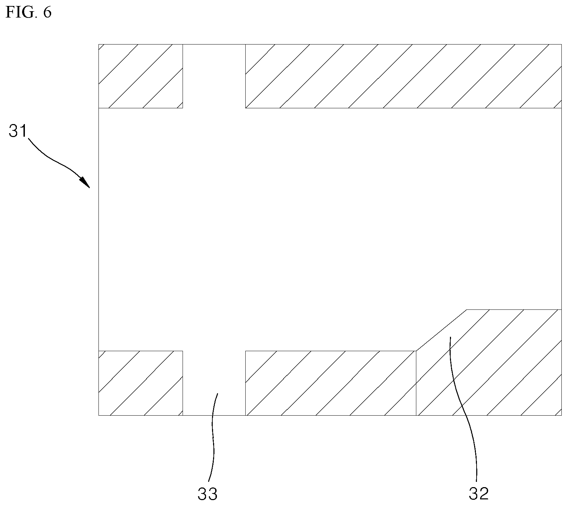

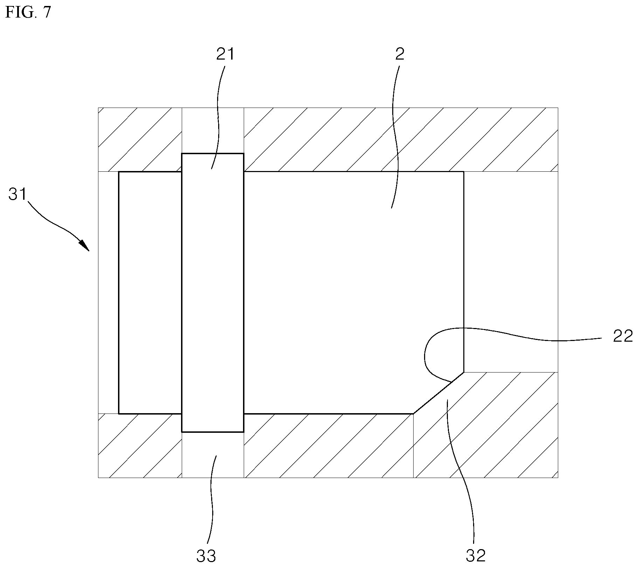

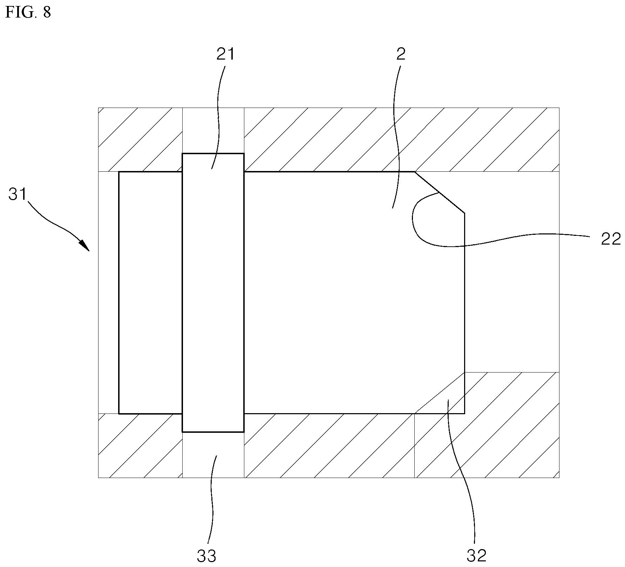

FIG. 6 is a plan view illustrating one unit of the lead inlet 31 having a shape corresponding to the electrode lead 2 having the asymmetric shape 22 of a chamfered shape, FIG. 7 is a plan view illustrating a state in which the electrode lead 2 having the asymmetric shape 22 of a chamfered shape is appropriately arranged in one unit of the lead inlet 31 having a shape corresponding to the electrode lead 2 and thus interference does not occur therebetween, and FIG. 8 is a plan view illustrating a state in which the electrode lead 2 having the asymmetric shape 22 of a chamfered shape is incorrectly arranged in one unit of the lead inlet 31 having a shape corresponding to the electrode lead 2 and thus interference occurs therebetween.

Referring to FIGS. 6 to 8, the direction restriction portion 32 may have a shape that allows the electrode lead 2 to be normally arranged without interference when the electrode lead 2 is input in any one direction (correct direction) of upward and downward directions, and interferes with the asymmetric shape 22 of the electrode lead 2 to restrict the input of the electrode lead 2 when the electrode lead 2 is input in in the other one direction (incorrect direction).

The direction restriction portion 32 may have a shape complementary to or corresponding to the asymmetric shape 22 of the electrode lead 2. For example, the direction restriction portion 32 may have a tapered shape corresponding to the electrode lead 2 in which the asymmetric shape 22 of a chamfered shape provided. The shape of the direction restriction portion 32 is satisfied as long as it is a shape in which the insertion of the electrode lead 2 is blocked due to interference with the electrode lead 2 when the electrode lead 2 is inserted in a direction not facing the asymmetric shape 22. For example, the shape of the direction restriction portion 32 may be variable as long as it is a shape that does not cause interference with a portion (another corner portion), in which the asymmetric shape 22 is not provided, when the electrode lead 2 is inserted while being turned upside down. That is, the shape of the direction restriction portion is not necessarily limited to a tapered shape.

The electrode lead 2 may be vertically input into the inlet 31. In other words, the electrode lead 2 may be input in a normal line direction of the electrode lead 2.

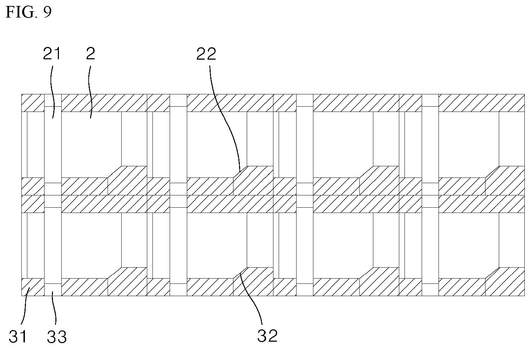

FIG. 9 is a plan view of the lead input pallet 3 including a plurality of juxtaposed inlets 31 each having a shape corresponding to the electrode lead 2 having the asymmetric shape 22 of a chamfered shape. Referring to this, the plurality of inlets 31 may be juxtaposed and provided in one lead input pallet 3 in the length direction and/or the width direction.

In addition, the inlets 31 may be open in the height direction so that a plurality of electrode leads 2 may be stacked and stored.

Referring to FIGS. 6 to 8 again, the inlet 31 may include a lead film receiving port 33 that extends to protrude further in the width direction from a receiving shape for receiving the electrode lead 2 in order to accommodate the lead film 21 provided in the electrode lead 2.

When the asymmetric shape 22 of the electrode lead 2 is provided in the lead film 21, the direction restriction portion 32 may be formed in the lead film receiving port 33 to correspond to the asymmetric shape 22 of the electrode lead 2.

The electrode lead 2 having the asymmetric shape may be supplied to the lead input pallet 3 in a state in which the lead film 21 is attached thereto. The electrode leads 2 thus supplied may be stored in a stacked form through the plurality of inlets 31 of the lead input pallet 3, which open upwardly.

The lead input pallet 3 accommodating the plurality of electrode leads 2 may be moved to the vicinity of a welding device configured to weld the electrode tab and the electrode lead of the electrode assembly to provide the electrode leads 2 to the welding device. In this case, since directions of the electrode leads 2 are correctly aligned, the electrode lead 2 can be welded to the electrode tab in the same direction supplied from the pallet 3.

It should be understood that the described aspects are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The aspects are described above with reference to a number of illustrative aspects thereof. However, aspects are not limited to the aspects and drawings set forth herein, and numerous other modifications and aspects may be drawn by one skilled in the art within the technical scope of the disclosure. Further, the effects and predictable effects based on the configurations in the disclosure are to be included within the scope of the disclosure though not explicitly described in the description of the aspects.

## Claims

1. An electrode lead for a battery which is press-processed to have a width direction and a length direction,
wherein a burr due to press cutting is formed on one surface of an upper surface and a lower surface of the electrode lead, and
an outline of the electrode lead is formed in a predetermined asymmetric shape when viewed from the surface on which the burr is formed, and is formed in a shape in which the asymmetric shape is reversed when viewed from the surface on which the burr is not formed.

2. The electrode lead of claim 1, wherein the electrode lead has an outline longer in the length direction than in the width direction.

3. The electrode lead of claim 1, wherein the asymmetric shape is a shape asymmetric with respect to an imaginary axis (X-axis) passing through a center of the electrode lead to be parallel to the length direction.

4. The electrode lead of claim 3, wherein the asymmetric shape is a shape asymmetric with respect to an imaginary axis (Y-axis) passing through the center of the electrode lead to be parallel to the width direction.

5. The electrode lead of claim 1, wherein the asymmetric shape is a shape asymmetric with respect to an imaginary axis (Y-axis) passing through a center of the electrode lead to be parallel to the width direction.

6. The electrode lead of claim 1, wherein the asymmetric shape includes a chamfered shape provided at one corner of the outline.

7. The electrode lead of claim 1, wherein the asymmetric shape includes an uneven shape provided at an edge portion of the outline.

8. The electrode lead of claim 1, wherein one end portion of the electrode lead in the length direction is a portion welded to an electrode tab while overlapping the electrode tab, and
the asymmetric shape is formed at a position avoiding the one end portion of the electrode lead, which is welded to the electrode tab.

9. The electrode lead of claim 8, wherein the asymmetric shape is provided at the other end portion of the electrode lead in the length direction.

10. The electrode lead of claim 1, wherein the electrode lead includes a lead film that is stacked on a surface of the electrode lead, and extends in the width direction to further protrude than the electrode lead in the width direction.

11. The electrode lead of claim 10, wherein the asymmetric shape is provided in an outline of the lead film.

12. A lead input pallet configured to vertically stack and store the electrode lead of any one of claims 1 to 11, the lead input pallet comprising:
an inlet into which the press-processed electrode lead is input; and
a direction restriction portion that does not interfere with the outline of the electrode lead when the electrode lead is input while a directionality of the electrode lead in a vertical direction is matched, and interferes with the outline of the electrode lead to restrict the input of the electrode lead when the electrode lead is input while the directionality of the electrode lead in the vertical direction is not matched.

13. The lead input pallet of claim 12, wherein the direction restriction portion has a shape complementary to the asymmetric shape of the electrode lead.

14. The lead input pallet of claim 12, wherein the direction restriction portion has a shape corresponding to the asymmetric shape of the electrode lead.

15. The lead input pallet of claim 12, wherein the electrode lead is vertically input into the lead input pallet through the inlet.

16. The lead input pallet of claim 12, wherein a plurality of inlets are provided by being juxtaposed in a length direction and a width direction of the electrode lead.

17. A lead input pallet configured to vertically stack and store the electrode lead of any one of claims 10 and 11, the lead input pallet comprising:
an inlet into which the press-processed electrode lead is input;
a lead film receiving port configured to receive the lead film partially provided on a surface of the electrode lead in the width direction; and
a direction restriction portion that does not interfere with the outline of the electrode lead when the electrode lead is input while a directionality of the electrode lead in a vertical direction is matched, and interferes with the outline of the electrode lead to restrict the input of the electrode lead when the electrode lead is input while the directionality of the electrode lead in the vertical direction is not matched.

18. The lead input pallet of claim 17, wherein the direction restriction portion is formed in a position corresponding to the asymmetric shape provided in the lead film.

19. The lead input pallet of claim 17, wherein a plurality of inlets are provided by being juxtaposed in the length direction and the width direction of the electrode lead.
